(19) Europäisches Patentamt
European Patent Office
Office européen des brevets

(11) **EP 1 985 641 A1**

(12) **EUROPEAN PATENT APPLICATION**
published in accordance with Art. 158(3) EPC

(43) Date of publication:
**29.10.2008 Bulletin 2008/44**

(51) Int Cl.:
*C08F 297/02* (2006.01)  *A43B 13/04* (2006.01)
*C08F 8/04* (2006.01)  *C08J 9/04* (2006.01)
*C08L 23/04* (2006.01)  *C08L 53/00* (2006.01)

(21) Application number: **07708157.8**

(22) Date of filing: **07.02.2007**

(86) International application number:
**PCT/JP2007/052118**

(87) International publication number:
**WO 2007/094216 (23.08.2007 Gazette 2007/34)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **13.02.2006 JP 2006035776**

(71) Applicant: **Asahi Kasei Chemicals Corporation
Tokyo 101-8101 (JP)**

(72) Inventors:
• **SASAKI, Sigeru**
  **Tokyo 100-8440 (JP)**
• **NITTA, Katsunori**
  **Tokyo 100-8440 (JP)**
• **ARAKI, Yoshifumi**
  **Tokyo 100-8440 (JP)**
• **YOON, Jung Sik**
  **Busanjin-Gu, Busan 614100 (KR)**
• **UM, Gi Yong**
  **Busanjin-Gu, Busan 614100 (KR)**
• **YOO, Chong Sun**
  **Busanjin-Gu, Busan 614100 (KR)**

(74) Representative: **Bradley, Josephine Mary et al
D Young & Co
120 Holborn
London EC1N 2DY (GB)**

(54) **HYDROGENATED BLOCK COPOLYMER, RESIN COMPOSITION CONTAINING SUCH HYDROGENATED BLOCK COPOLYMER, THEIR CROSSLINKED PRODUCT AND THEIR CROSSLINKED FOAM**

(57)     Provided is a hydrogenated block copolymer for preparing a foam excellent in tear strength, compression set resistance, low impact resilience, and abrasion resistance.

More specifically, provided is a hydrogenated block copolymer comprising a vinyl aromatic compound and a conjugated diene, wherein:
(a) the vinyl aromatic unit content is greater than 35 wt. % and not greater than 90 wt.%,
(b) the vinyl aromatic polymer block content is not greater than 40 wt.%,
(c) the weight average molecular weight is from $5 \times 10^4$ to $100 \times 10^4$, and
(d) the hydrogenation ratio of double bonds derived from the conjugated diene is less than 70%.

**EP 1 985 641 A1**

**Description**

[Technical Field]

The present invention relates to a specific hydrogenated block copolymer suited for a raw material for a crosslinked product and a

crosslinked foamed product, a resin composition comprising the specific hydrogenated block copolymer, and a crosslinked product and a crosslinked foamed product thereof.

Background Art

Conjugated diene polymers are inferior in heat stability, weather resistance and ozone resistance because of their unsaturated double bonds.

A method of improving these physical properties by hydrogenating the unsaturated double bonds are known conventionally (refer to, for example, Patent Document 1).

Hydrogenated polymers have been used widely in the fields of modifiers for thermoplastic resins and automobile parts as a mixture with a thermoplastic resin such as polyolefin or another rubber polymer by taking advantage of their characteristics. Patent Document 2, for example, discloses a composition containing an α-olefin polymer and a hydrogenated polymer obtained by hydrogenating a polymer in which at least 40% of double bonds derived from a conjugated diene have a vinyl bond structure.

Patent Documents 3 and 4 disclose a composition containing a thermoplastic resin and a conjugated diene polymer in which at least 70% of double bonds derived from the conjugated diene have been hydrogenated.

Patent Document 5 discloses a composition composed of a polypropylene resin and a vinyl aromatic/conjugated diene copolymer in which a vinyl aromatic unit content is from 5 to 60 wt.% and at least 80% of double bonds derived from the conjugated diene in the copolymer have been hydrogenated.

With respect to specific intended uses, for example, Patent Document 6 discloses a block copolymer which has a block composed mainly of styrene and another block composed mainly of butadiene/styrene and in which at least 80% of double bonds derived from the conjugate diene have been hydrogenated and proposes the use of it as a shoe sole material. A hydrogenated polymer having a styrene content not greater than 25 wt.% is exemplified in Examples. The hydrogenated polymer however does not exhibit satisfactory performance for a shoe sole material because of its high hydrogenation ratio and low styrene content.

Patent Document 7 proposes a foam containing a vinyl aromatic/conjugated diene copolymer which has a vinyl aromatic unit content greater than 40 parts by weight and not greater than 60 parts by weight and in which at least 70% of double bonds derived from the conjugated diene in the copolymer have been hydrogenated.

Patent Document 8 proposes, as a polymer for a foam, a hydrogenated copolymer having a tanδ peak within a range of from -20 to 40°C and a vinyl aromatic unit content not greater than 50 wt.% or less. Examples of this document disclose a copolymer which has a styrene unit content not greater than 30 wt.% and in which a hydrogenation ratio of double bonds derived from the conjugated diene in the copolymer is 75%.

Patent Document 9 discloses, as a polymer for a foam, a copolymer in which a hydrogenation ratio of double derived from the conjugated diene in the copolymer is 75% or greater.

As described above, various hydrogenated polymers different in a vinyl aromatic compound content, an amount of a vinyl aromatic polymer block, or a hydrogenation ratio are known, but they are not satisfactory in various physical properties, such as low impact resilience and abrasion resistance, which are important properties particularly when they are used as a shoe sole material and the like.

[Patent Document 1] Japanese Patent Laid-Open No. Sho 56-30401
[Patent Document 2] Japanese Patent Laid-Open No. Sho 56-30447
[Patent Document 3] Japanese Patent Laid-Open No. Hei 2-36244
[Patent Document 4] Japanese Patent Laid-Open No. Hei 2-158643
[Patent Document 5] Japanese Patent Laid-Open No. Hei 6-287365
[Patent Document 6] Japanese Patent Laid-Open No. 2001-197902
[Patent Document 7] WO2004/090028
[Patent Document 8] Japanese Patent Laid-Open No. Hei 05-345833
[Patent Document 9] Japanese Patent Laid-Open No. 2003-277539

[Disclosure of the Invention]

[Problems to be solved by the Invention]

An object of the present invention is to provide a hydrogenated block copolymer excellent in various properties such as tear strength, compression set resistance, low impact resilience, and abrasion resistance and suited for a crosslinked product and a crosslinked foamed product.

[Means for Solving the Problems]

With a view to overcoming the above-described problem, the inventors of the present invention have proceeded with an extensive investigation on a conjugated diene polymer. As a result, the inventors of the present invention found that the above-described problem can be solved effectively by using a conjugated diene copolymer having a specific vinyl aromatic unit content and a specific vinyl aromatic polymer block content, and having a specific hydrogenation ratio, and completed the present invention.

There are provided the following inventions:

(1)
A hydrogenated block copolymer comprising a vinyl aromatic compound and a conjugated diene, wherein:

    (a) the vinyl aromatic unit content is greater than 35 wt.% and not greater than 90 wt.%,
    (b) the vinyl aromatic polymer block content is not greater than 40 wet.%,
    (c) the hydrogenation ratio of double bonds derived from the conjugated diene is less than 70%, and
    (d) the weight average molecular weight is from $5\times10^4$ to $100\times10^4$.

(2)
The hydrogenated block copolymer as described above in (1), which has at least one random copolymer block of the vinyl aromatic compound and the conjugated diene.

(3)
The hydrogenated block copolymer as described above in (1) or (2), wherein the vinyl aromatic content unit is greater than 50 wt.% and not greater than 90 wt.%.

(4)
The hydrogenated block copolymer as described above in any one of (1) to (3), wherein the hydrogenation ratio of double bonds derived from the conjugated diene is 5% or greater and not greater than 65%.

(5)
The hydrogenated block copolymer as described above in any one of (1) to (4), wherein a melt flow rate (JIS K-7210: at 190°C and a load of 2.16 Kg) is 0.01 or greater and not greater than 60 (measurement unit: g/10 min).

(6)
The hydrogenated block copolymer as described above in (5), wherein the melt flow rate (JIS K-7210: at 190°C and a load of 2.16 Kg) is 0.1 or greater and not greater than 40 (measurement unit: g/10 min).

(7)
A resin composition comprising the hydrogenated block copolymer as described above in any one of (1) to (6) and a thermoplastic resin other than the hydrogenated block copolymer.

(8)
The resin composition as described above in (7), wherein a weight ratio of the hydrogenated block copolymer and the thermoplastic resin other than the hydrogenated block copolymer (the hydrogenated block copolymer/the thermoplastic resin other than the hydrogenated block copolymer) is from 5/95 to 95/5.

(9)
The resin composition as described above in (7) or (8), wherein the thermoplastic resin is an olefin thermoplastic resin.

(10)
The resin composition as described above in (9), wherein the thermoplastic resin is at least one ethylene polymer selected from the group consisting of polyethylene, an ethylene-propylene copolymer, an ethylene-propylene-butylene copolymer, an ethylene-butylene copolymer, an ethylene-hexene copolymer, an ethylene-octene copolymer, an ethylene-vinyl acetate copolymer, an ethylene-acrylic ester copolymer, and an ethylene/methacrylic ester copolymer.

(11)
The composition comprising the hydrogenated block copolymer or the resin composition as described above in any one of (1) to (10) and a crosslinking agent.

(12)

The composition as described above in (11), further comprising a crosslinking assistant.

(13)

The composition as described above in (11) or (12), wherein a used amount of the crosslinking agent or the crosslinking assistant is 0.01 part by weight or greater and not greater than 20 parts by weight derived from 100 parts by weight of an amount of the hydrogenated block copolymer or a total amount of the hydrogenated block copolymer and the thermoplastic resin other than the hydrogenated block copolymer.

(14)

A crosslinked product comprising the hydrogenated block copolymer, the resin composition, or the composition as described above in any one of (1) to (12).

(15)

A crosslinked foamed product comprising the hydrogenated block copolymer, the resin composition, or the composition as described above in any one of (1) to (12).

(16)

A thermoplastic vulcanizate comprising the hydrogenated block copolymer, the resin composition, or the composition as described above in any one of (1) to (12).

(17)

Footwear obtained using the crosslinked foamed product as described above in (15).

[Effect of the Invention]

The hydrogenated block copolymer, the resin composition comprising the hydrogenated block copolymer, and the crosslinked product and the crosslinked foamed product thereof according to the present invention are excellent in tear strength, compression set resistance, low impact resilience, and abrasion resistance. In particular, the crosslinked foamed product according to the present invention is suited for a footwear material, especially a footwear sole material.

[Best Mode for Carrying out the Invention]

The present invention will hereinafter be described specifically.

The present invention relates to a hydrogenated block copolymer, a resin composition comprising the hydrogenated block copolymer and a thermoplastic resin other than the hydrogenated block copolymer, and a crosslinked product, a crosslinked foamed product, or a thermoplastic vulcanizate each comprising the hydrogenated block copolymer or the resin composition.

The hydrogenated block copolymer of the present invention is a copolymer obtained by partially hydrogenating a conjugated diene-vinyl aromatic compound copolymer.

Examples of the vinyl aromatic compound which is a monomer component include styrene, $\alpha$-methylstyrene, p-methylstyrene, divinylbenzene, 1,1-diphenylethylene, N,N-dimethyl-p-aminoethylstyrene, and N,N-diethyl-p-aminoethylstyrene. They may be used not only singly but also in combination of two or more thereof.

A content of the vinyl aromatic unit in the hydrogenated block copolymer is greater than 35 wt.% from the viewpoint of tear strength and low impact resilience and not greater than 90 wt.% from the viewpoint of flexibility. It is preferably greater than 50 wt.% and not greater than 90 wt.%, more preferably greater than 55 wt.% and not greater than 88 wt.%, most preferably greater than 60 wt.% and not greater than 86 wt.%.

A content of the vinyl aromatic polymer block in the hydrogenated block copolymer is essentially 40 wt.% or less from the viewpoint of tear strength, abrasion resistance, low impact resilience, and flexibility and preferably 1 wt.% or greater from the viewpoint of production ease and tear strength. It is more preferably from 5 to 35 wt.%, still more preferably from 10 to 30 wt.%.

The content of the vinyl aromatic polymer block in the hydrogenated block copolymer is determined in accordance with the following equation by using a weight of the vinyl aromatic polymer block (except a vinyl aromatic polymer having an average polymerization degree not greater than about 30) obtained using a method of oxidatively decomposing the copolymer, which has not yet been hydrogenated, with tertiary-butyl hydroperoxide in the presence of osmium tetroxide as a catalyst (the method described in I.M. KOLTHOFF, et al., J. Polym. Sci. 1,429 (1946) and hereinafter called the "osmium tetroxide method").

Content (wt.%) of vinyl aromatic polymer block = (weight of vinyl aromatic polymer block in copolymer before hydrogenation/weight of copolymer before hydrogenation) $\times$ 100

In the hydrogenated block copolymer of the present invention, a conjugated diene which is a monomer component, means a diolefin having a pair of conjugated double bonds. Examples include 1,3-butadiene, 2-methyl-1,3-butadiene (isoprene), 2,3-dimethyl-1,3-butadiene, 1,3-pentadiene, 2-methyl-1,3-pentadiene, and 1,3-hexadiene. 1,3-butadiene and isoprene are particularly typical examples. They may be used not only singly but also in combination of two or more.

From the viewpoint of tear strength, 1,3-butadiene is preferred to be used as a main component of the conjugated diene. More specifically, amount of a 1,3-butadiene in the conjugated diene is preferably 80 wt.% or greater, more preferably 90 wt.% or greater, most preferably 95 wt.% or greater.

A conjugated diene content in the hydrogenated block copolymer is preferably 10 wt.% or greater and not greater than 65 wt.%.

In the hydrogenated block copolymer of the present invention, the microstructure (ratios of cis bond/trans bond/ vinyl bond) of the conjugated diene portion in the copolymer before hydrogenation can be changed as desired by using a polar compound such as a vinyl bond content regulator which will be described later, and there is no particular limitation on it. The vinyl bond content derived from conjugated diene is preferably 5% or greater from the viewpoint of productivity and preferably not greater than 80% from the viewpoint of tear strength. It is more preferably 10% or greater and not greater than 60%, still more preferably 15% or greater and not greater than 40%.

A vinyl bond content derived from the conjugated diene in the copolymer can be determined using a nuclear magnetic resonance apparatus (NMR).

In the hydrogenated block copolymer of the present invention, the hydrogenation ratio of double bonds derived from the conjugated diene in the copolymer which has not yet been hydrogenated is essentially less than 70% from the viewpoint of flexibility, tear strength and abrasion resistance of a crosslinked product and a crosslinked foamed product obtained from the hydrogenated block copolymer. It is preferably 5% or greater, more preferably 5% or greater and less than 65%, more preferably 10% or greater and less than 60%, most preferably 15% or greater and less than 50% from the viewpoint of heat resistance and light resistance of the hydrogenated block copolymer, and the crosslinked product and the crosslinked foamed product thereof, and shrink resistance in crosslinking.

The hydrogenation ratio of the hydrogenated block copolymer can be determined using a nuclear magnetic resonance apparatus (NMR).

The weight average molecular weight of the hydrogenated block copolymer of the present invention is $5 \times 10^4$ or greater from the viewpoint of mechanical strength such as tensile strength, tear strength and compression set resistance of a crosslinked foamed product obtained from the block copolymer. It is, on the other hand, $100 \times 10^4$ or less from the viewpoint of molding processability. It is more preferably from $8 \times 10^4$ to $80 \times 10^4$, still more preferably from $10 \times 10^4$ to $50 \times 10^4$, most preferably from $13 \times 10^4$ to $30 \times 10^4$.

The molecular weight distribution of the hydrogenated block copolymer of the present invention is preferably from 1.01 to 6. It is preferably from 1.03 to 5 from the viewpoint of molding processability.

The weight average molecular weight and molecular weight distribution of the hydrogenated block copolymer can be determined from a polystyrene-equivalent molecular weight measured by gel permeation chromatography (apparatus: "LC-D" (trade name; product of Shimadzu Corp), column: TSKgeIGMHXL (4.6 mmID × 30 cm) two columns, solvent: tetrahydrofuran).

The hydrogenated block copolymer of the present invention shows a viscosity suited for a kneading operation in preparing a resin composition, a crosslinked product, or a crosslinked foamed product.

The melt flow rate (JIS K-7210: at 190°C and a load of 2.16 KG) of the hydrogenated block copolymer is preferably 0.01 or greater and not greater than 60 (measurement unit: g/10 min), more preferably 0.1 or greater and not greater than 40, especially preferably 0.5 or greater and not greater than 35, most preferably 1.5 or greater and not greater than 35 from the viewpoint of molding processability, flexibility of a crosslinked foamed product, tear strength, tensile strength, and compression set resistance.

The structure of the hydrogenated block copolymer of the present invention is not particularly limited and any structure is usable. A hydrogenated copolymer having at least one structure selected from the following formulas is particularly recommended.

(1) H-S
(2) S-H-S
(3) (H-S)$_m$-X
(4) (H-S)$_n$-X-(H)$_p$
(5) (H-S)$_n$-H
(6) H-(S-E)$_n$
(7) H-(E-S)$_n$
(8) E-(S-H)$_n$-S
(9) H-(E-S)$_n$-H
(10) (E-S-H)$_m$-X
(11) (H-E-S)$_m$-X
(12) (H-S-E)$_m$-X
(13) (H-E-S-E)$_m$-X

(In the above formulas, S represents a random copolymer block of a conjugated diene and a vinyl aromatic compound; H represents a polymer block of a vinyl aromatic compound; and E represents a polymer block of a conjugated diene; each of the blocks containing the copolymer component in its name preferably in an amount of 60 wt.% or greater, more preferably 80 wt.% or greater, still more preferably 90 wt.% or greater, most preferably 95 wt.% or greater; m is an integer of 2 or greater, preferably 2 or greater and not greater than 10, n and p each is an integer of 1 or greater, preferably an integer of 1 or greater and not greater than 10; and X represents a coupling agent residue or a polyfunctional initiator residue).

In the above formulas, the distribution of the vinyl aromatic compounds in the random copolymer block S may be uniform, tapered, or stepwise. The random copolymer block S may have a plurality of portions in which the vinyl aromatic units are distributed uniformly and/or a plurality of portions in which the vinyl aromatic units are distributed in the tapered form. The random copolymer block S may have a plurality of segments different in the vinyl aromatic unit content.

Distribution of non-hydrogenated double bonds derived from a conjugated diene compound is not particularly limited. For improvement of mechanical strength and the like, double bonds derived from the conjugated diene may remain more at one or more end block portions of the molecule than at the central block portion of the molecule.

As the hydrogenated block copolymer of the present invention, a modified hydrogenated block copolymer to which at least one functional-group-containing atomic group is bonded may be employed. Some part of the hydrogenated block copolymer may be the modified hydrogenated block copolymer.

Examples of the functional-group-containing atomic group include atomic groups containing at least one functional group selected from a hydroxyl group, a carboxyl group, a carbonyl group, a thiocarbonyl group, an acid halide group, an acid anhydride group, a thiocarboxylic acid group, an aldehyde group, a thioaldehyde group, a carboxylic ester group, an amide group, a sulfonic acid group, a sulfonic ester group, a phosphoric acid group, a phosphoric ester group, an amino group, an imino group, a nitrile group, a pyridyl group, a quinoline group, an epoxy group, a thioepoxy group, a sulfide group, an isocyanate group, an isothiocyanate group, a silicon halide group, an alkoxysilicon group, a tin halide group, an alkoxytin group, a phenyltin group, and the like.

For the preparation of the modified hydrogenated block copolymer, a compound (modifier) forming or having the functional-group-containing atomic group is used.

A secondary modified hydrogenated block copolymer that is obtained by reacting the modified hydrogenated block copolymer with a secondary modifier having reactivity to a functional group of the modified hydrogenated block copolymer may be used. Some part of the modified hydrogenated block copolymer may be the secondary modified hydrogenated block copolymer.

The functional group bonded to the modified hydrogenated block copolymer has reactivity to the above-described secondary modifier, a functional-group-containing polyolefin thermoplastic resin, an inorganic filler, a polar-group-containing additive or the like. At the same time, physical affinity, such as hydrogen bond, between the nitrogen atom, the oxygen atom, or the carbonyl group in the modified hydrogenated block copolymer and the polar group of the polyolefin thermoplastic resin, the inorganic filler, or the polar-group-containing additive effectively generate a mutual action. As a result, when the hydrogenated block copolymer of the present invention is a modified hydrogenated block copolymer or a secondary modified hydrogenated block copolymer, a further improvement in low impact resilience and abrasion resistance can be observed.

In the present invention, a resin composition comprising a hydrogenated block copolymer can be obtained using the hydrogenated block copolymer (it may be the modified hydrogenated block copolymer or the secondary modified hydrogenated block copolymer) and a thermoplastic resin other than the hydrogenated block copolymer. The resin composition is suited for the preparation of a crosslinked product or a crosslinked foamed product.

A weight ratio of the hydrogenated block copolymer and the thermoplastic resin other than the hydrogenated block copolymer (a hydrogenated block copolymer/thermoplastic resin other than the hydrogenated block copolymer weight ratio) is preferably from 5/95 to 95/5, more preferably from 10/90 to 75/25, still more preferably from 15/85 to 65/35.

A crosslinked product or a crosslinked foamed product obtained from the hydrogenated block copolymer and the thermoplastic resin other than the hydrogenated block copolymer with the above-described weight ratio is excellent in tear strength, compression set resistance and low impact resilience.

In the present invention, when the hydrogenated block copolymer is the modified hydrogenated block copolymer, a hydrogenated-block-copolymer-comprising resin composition comprising the modified hydrogenated block copolymer and a secondary modifier component in an amount of 0.01 part by weight or greater and not greater than 20 parts by weight, preferably 0.02 part by weight or greater and not greater than 10 parts by weight, still more preferably 0.05 part by weight or greater and not greater than 7 parts by weight, each based on 100 parts by weight of the total amount of the modified hydrogenated block copolymer and the thermoplastic resin other than the hydrogenated block copolymer can be obtained.

In the present invention, preferred thermoplastic resin is an olefin thermoplastic resin. Specific examples include polyethylene and polypropylene;

copolymers of ethylene or propylene and a monomer copolymerizable with them, which contains at least 50 wt.% of either ethylene or propylene, such as an ethylene-propylene copolymer, an ethylene-propylene-butylene copolymer, an ethylene-butylene copolymer, an ethylene-hexene copolymer, an ethylene-octene copolymer, an ethylene-vinyl acetate copolymer or a hydrolysate thereof, a copolymer of ethylene and an acrylic ester, a copolymer of ethylene and a methacrylic ester, an ethylene-acrylic acid ionomer, a chlorinated polyethylenepropylene-butylene copolymer, a propylene-hexene copolymer, a propylene-octene copolymer, a copolymer of propylene and an acrylic ester, a copolymer of propylene and a methacrylic ester, and chlorinated polypropylene;
cyclic olefin polymers such as an ethylene-norbornene copolymer, and polybutene polymers.

Examples of the acrylic ester of a copolymerizable monomer include esters of an alcohol having from 1 to 24 carbon atoms or glycidyl alcohol and acrylic acid, such as methyl acrylate, ethyl acrylate, propyl acrylate, butyl acrylate, pentyl acrylate, and hexyl acrylate. Examples of the methacrylic ester include esters of an alcohol having from 1 to 24 carbon atoms or glycidyl alcohol and methacrylic acid, such as methyl methacrylate, ethyl methacrylate, propyl methacrylate, butyl methacrylate, pentyl methacrylate, and hexyl methacrylate.

Additional examples of the thermoplastic resin of a homopolymer include polymers of a vinyl aromatic compound, polymers of acrylic acid, or ester or amide thereof, polymers of methacrylic acid, or ester or amide thereof, vinyl chloride polymers such as polyvinyl chloride and polyvinylidene chloride, a vinyl acetate polymer or hydrolysate thereof, polyacrylonitrile, polymethacrylonitrile, acrylate polymers, and butadiene polymers such as 1,2-polybutadiene and trans-polybutadiene.

Examples of the thermoplastic resin of a copolymer include block copolymers of a non-hydrogenated conjugated diene and a vinyl aromatic compound, rubber-modified styrene copolymers (HIPS), an acrylonitrile-butadiene-styrene copolymer (ABS), methacrylic ester-butadiene-styrene copolymers (MBS), a copolymer of acrylonitrile and methacrylonitrile, copolymers of a vinyl aromatic compound and another vinyl monomer, and copolymers of nitrile and another vinyl monomer, which contains 50 wt.% or more of an acrylonitrile monomer. Examples of the another vinyl monomer include ethylene, propylene, butylene, vinyl chloride, vinylidene chloride, vinyl acetate, acrylic acid, an acrylic ester such as methyl acrylate, methacrylic acid, a methacrylic ester such as methyl methacrylate, acrylonitrile, and methacrylonitrile.

Additional examples include amide copolymers such as nylon-46, nylon-6, nylon-66, nylon-610, nylon-11, nylon-12 and nylon-612, ester copolymers, thermoplastic urethane copolymers, carbonate copolymers such as poly-4,4'-dioxydiphenyl-2,2'-propane carbonate, thermoplastic sulfone copolymers such as polyethersulfone and polyallylsulfone, oxymethylene copolymers, phenylene ether copolymers such as poly(2,6-dimethyl-1,4-phenylene) ether, phenylene sulfide copolymers such as polyphenylene sulfide and poly-4,4'-diphenylene sulfide, arylate copolymers, ether ketone copolymers, ketone copolymers, fluorine copolymers, oxybenzoyl copolymers, and imide copolymers.

Of these thermoplastic resins, an ethylenic homopolymer or copolymer is preferred from the viewpoint of a crosslink property. An ethylene-vinyl acetate copolymer is especially preferred. The copolymer may be either a random copolymer or a block copolymer.

From the viewpoint of a foaming property, polymers having, a branched structure in the molecule, such as ethylene-propylene copolymer, ethylene-butylene copolymer, and ethylene-octene copolymer are preferred.

The thermoplastic resins may be used either singly or in combination of two or more thereof.

The melt flow rate (in accordance with JIS K-7210; at 190°C and a load of 2.16 Kg) of the thermoplastic resin is preferably from 0.1 to 100 g/10 minutes.

Any conventional process may be employed for the polymerization of the thermoplastic resin and examples include polymerization using a transition metal catalyst, radical polymerization, and ion polymerization.

The number average molecular weight of the thermoplastic resin is typically 1000 or greater, preferably from 5000 to $500 \times 10^4$, more preferably from $1 \times 10^4$ to $100 \times 10^4$. These thermoplastic resins may be modified in advance.

The hydrogenated-block-copolymer-comprising resin composition of the present invention may comprise an elastomer other than the hydrogenated block copolymer of the present invention.

Examples of the elastomer include
a butadiene rubber or a hydrogenation product thereof;
a styrene-butadiene rubber or a hydrogenation product thereof;
a styrene-isoprene rubber or a hydrogenation product thereof;
an isoprene rubber;
an acrylonitrile-butadiene rubber or a hydrogenation product thereof;
a chloroprene rubber;
olefin elastomers such as an ethylene-propylene rubber, an ethylene-propylene-diene rubber, an ethylene-butene-diene rubber, an ethylene-butene rubber, an ethylene-hexene rubber, and an ethylene-octene rubber;
a butyl rubber, a brominated butyl rubber, an acrylic rubber, a fluororubber, a silicone rubber, a chlorinated polyethylene rubber, an epichlorohydrin rubber, an $\alpha,\beta$-unsaturated nitrile-acrylic ester-conjugated diene copolymer rubber, an urethane rubber, a polysulfide rubber, and a natural rubber.

These elastomers may be a modified rubber provided with a functional group. Alternatively, these elastomers may be modified in advance.

EP 1 985 641 A1

Of these, a butyl rubber and a brominated butyl rubber are preferred from the viewpoint of impact absorption.

The hydrogenated-block-copolymer-comprising resin composition of the present invention may optionally comprise a softening agent to improve processability. The softening agent is employed in order to soften a rubber, increase its volume and improve processability. Examples of the softening agent include a mineral oil, and a liquid or low-molecular-weight synthetic softening agent. Of these, a mineral oil is preferred. It is generally called a process oil or an extender oil and is a mixture of compounds having a paraffin chain, a naphthene ring, and an aromatic ring. Softening agents in which the number of carbons in the paraffin chain is at least 50% of the total carbon atoms are referred to as paraffin type ones; softening agents in which the number of carbon atoms in the naphthene ring is 30 to 45% of the total carbon atoms are referred to as naphthene type ones; and softening agents in which the number of carbon atoms in the aromatic ring exceeds 30% of the total carbon atoms are referred to as aromatic type ones. The preferred softening agent in the present invention is a naphthene type and/or a paraffin type softening agent. As the synthetic softening agent, polybutene, low-molecular-weight polybutadiene, liquid paraffin and the like are usable. Mineral oils of softening agent for rubber are preferred.

The softening agent is added in an amount of preferably 0 part by mass or greater and not greater than 200 parts by mass, more preferably from 0 to 100 part by mass, based on 100 parts by mass of the hydrogenated block copolymer.

A crosslinked product or a crosslinked foamed product comprising the hydrogenated block copolymer or the resin composition comprising the hydrogenated block copolymer and the thermoplastic resin other than the hydrogenated block copolymer can be used suitably for various purposes.

The crosslinked foamed product of the present invention can be utilized after forming or molding into various shapes such as sheet. In particular, the crosslinked foamed product of the present invention is suited as a footwear material, especially, as a shoe sole material.

A content of the hydrogenated block copolymer in the crosslinked product or the crosslinked foamed product is preferably 5 wt.% or greater, more preferably 15 wt.% or greater, more preferably 25 wt.% or greater, most preferably 35 wt.% or greater from the viewpoint of tear strength, low impact resilience, and abrasion resistance.

To the hydrogenated block copolymer, the hydrogenated-block-copolymer-comprising resin composition, the crosslinked product comprising the hydrogenated block copolymer or a crosslinked foamed product thereof, or the crosslinked product comprising the resin composition or a crosslinked foamed product thereof according to the present invention, an optional additive may be added as needed.

There is no particular limitation on the kind of the additives insofar as they are typically used for preparation of a thermoplastic resin or a rubbery polymer. Examples include inorganic fillers such as silica, talc, mica, calcium silicate, hydrotalcite, kaolin, diatomaceous earth, graphite, calcium carbonate, magnesium carbonate, magnesium hydroxide, aluminum hydroxide, calcium sulfate and barium sulfate, and organic fillers such as carbon black.

Examples also include lubricants or releasing agents such as stearic acid, behenic acid, zinc stearate, calcium stearate, magnesium stearate, and ethylenebisstearamide; plasticizers such as organopolysiloxane and mineral oil; antioxidants such as hindered phenol antioxidants and phosphor, sulfur or amine type heat stabilizers; hindered amine light stabilizers; benzotriazole ultraviolet absorbers; flame retardants; antistatics; reinforcing agents such as organic fibers, glass fibers, carbon fibers and metal whiskers; coloring agents such as titanium oxide, iron oxide, and carbon black; and additives as described in "Gomu/Purasuchikku Haigo Yakuhin" (ed. by Rubber Digest).

Preparation processes of the hydrogenated block copolymer, the resin composition comprising the hydrogenated block copolymer, the crosslinked product thereof, and the crosslinked foamed product thereof will hereinafter be described.

A block copolymer before hydrogenation, which is necessary for obtaining the hydrogenated block copolymer of the present invention, can be obtained by anionic living polymerization. It may be performed, for example, by using a polymerization initiator in a hydrocarbon solvent.

Examples of the hydrocarbon solvent include aliphatic hydrocarbons such as n-butane, isobutane, n-pentane, n-hexane, n-heptane, and n-octane, alicyclic hydrocarbons such as cyclopentane, cyclohexane, cycloheptane, and methylcycloheptane, and aromatic hydrocarbons such as benzene, toluene, xylene, and ethylbenzene.

As the polymerization initiator, organic alkali metal compounds which are known to have anionic polymerization activity on conjugated dienes and vinyl aromatic compounds are generally employed. For example, aliphatic hydrocarbon alkali metal compounds, aromatic hydrocarbon alkali metal compounds, and organic aminoalkali metal compounds can be used. Alkali metals include lithium, sodium, and potassium. Preferred examples of the organic alkali metal compounds include aliphatic or aromatic hydrocarbon lithium compounds having from 1 to 20 carbon atoms, and such hydrocarbon lithium compounds having, in the molecule thereof, a plurality of lithiums, such as dilithium compounds, trilithium compounds, and tetralithium compounds.

Specific examples include n-propyllithium, n-butyllithium, sec-butyllithium, tert-butyllithium, a reaction product between diisopropenylbenzene and sec-butyllithium, and a reaction product between divinylbenzene, sec-butyllithium, and a small amount of 1,3-butadiene. Also usable are organic alkali metal compounds as disclosed in U.S. Pat. No.

5,708,092, GB Pat No. 2,241,239; and U.S. Pat. No. 5,527,753.

When the organic alkali metal compound is used as a polymerization initiator for preparing the hydrogenated block copolymer of the present invention, a tertiary amine compound, an ether compound, an alkali metal alkoxy compound, or the like may be added as a vinyl bond content regulator in order to increase a vinyl bond content derived from the conjugated diene.

The tertiary amine compound is, for example, a compound represented by the formula $R_1R_2R_3N$ (wherein $R_1$, $R_2$, and $R_3$ each independently represents a hydrocarbon group having from 1 to 20 carbon atoms or a hydrocarbon group having a secondary amino group or a tertiary amino group). Examples include trimethylamine, triethylamine, tributylamine, N,N-dimethylaniline, N-ethylpiperidine, N-methylpyrrolidine, N,N,N',N'-tetramethylethylenediamine, N,N, N',N'-tetraethylethylenediamine, 1,2-dipiperidinoethane, trimethylaminoethylpiperazine, N,N,N',N'',N''-pentamethylethylenetriamine, and N,N'-dioctyl-p-phenylenediamine.

The ether compound is, for example, a linear ether compound or a cyclic ether compound. Examples of the linear ether compound include:

dimethyl ether, diethyl ether, and diphenyl ether;
dialkyl ether compounds of ethylene glycol such as ethylene glycol dimethyl ether, ethylene glycol diethyl ether, and ethylene glycol dibutyl ether, and
dialkyl ether compounds of diethylene glycol such as diethylene glycol dimethyl ether, diethylene glycol diethyl ether, and diethylene glycol dibutyl ether. Examples of the cyclic ether compound include tetrahydrofuran, dioxane, 2,5-dimethyloxolane, 2,2,5,5-tetramethyloxolane, 2,2-bis(2-oxolanyl)propane, furfuryl alcohol, and alkyl ethers of furfuryl alcohol.

The alkali metal alkoxide compound is, for example, a compound represented by the following formula: LiOR, KOR, or NaOR (wherein, R represents an alkyl group having from 2 to 12 carbon atoms). Of these, sodium alkoxides having a $C_{3-6}$ alkyl group are preferred, with sodium t-butoxide and sodium t-pentoxide being especially preferred.

The polymerization of the block copolymer before hydrogenation may be either batch polymerization or continuous polymerization, or a combination thereof. Any method is usable insofar as it yields the hydrogenated block copolymer of the present invention.

The polymerization temperature is generally from 0 to 180°C, preferably from 30 to 150°C.

The time required for the polymerization depends on the conditions, and is generally within 48 hours, especially preferably from 0.1 to 10 hours.

The atmosphere in the polymerization system is preferably an atmosphere of an inert gas such as nitrogen gas.

The polymerization pressure is not particularly limited insofar as the pressure falls within a range sufficient for maintaining the liquid phase of the monomers and a solvent within the above-described polymerization temperature range.

In the polymerization of the block copolymer which has not yet been hydrogenated, a coupling reaction may be performed by adding a required amount of a coupling agent having two or more functional groups upon completion of the polymerization.

As the bifunctional coupling agent, any known ones are usable without particular limitation. Examples include:

dihalogen compounds such as dimethyldichlorosilane, dichlorodiphenylsilane, dimethyldibromosilane, and dibromoethane;
acid esters such as methyl benzoate, ethyl benzoate, phenyl benzoate, phthalic esters, methyl acrylate, and ethyl acrylate; and
alkoxysilane compounds such as dimethoxysilane and diethoxysilane.

As the polyfunctional coupling agent having three or more functional groups, any known ones are usable without particular limitation. Examples include polyhydric alcohols having three or more hydroxyl groups, polyvalent epoxy compounds such as epoxidized soybean oil and diglycidyl bisphenol A, and polyhalogenated compounds such as halogenated silicon compounds represented by the following formula: $R_{(4-n)}SiX_n$ (wherein, Rs each independently represents a hydrocarbon group having from 1 to 20 carbon atoms, X represents a halogen, and n is an integer of 3 or 4) such as methylsilyl trichloride, t-butylsilyl trichloride, and silicon tetrachloride, and brominated products thereof; and halogenated tin compounds such as methyltin trichloride, t-butyltin trichloride, and tin tetrachloride. Additional examples include alkoxysilane compounds represented by the following formula: $R_{(4-n)}Si(OR)_n$ (wherein, Rs each independently represents a hydrocarbon group having from 1 to 20 carbon atoms and n is an integer from 2 to 4) such as trimethoxysilane, tetramethoxysilane, and tetraethoxysilane.

Dimethyl carbonate, diethyl carbonate, and the like are also usable.

The preparation process of the modified hydrogenated block copolymer is not particularly limited. The modified hydrogenated block copolymer can be obtained by hydrogenating a modified block copolymer obtained by reacting a conjugated diene copolymer with a modifier upon completion of the polymerization.

For example, in anionic polymerization, hydrogenation may be performed after polymerization using a polymerization initiator having a functional group or an unsaturated monomer having a functional group. As described in Japanese Patent Publication No. Hei 4-39495 (U.S. Pat. No. 5,115,035), hydrogenation may be performed after addition reaction of a modifier to a living end of a polymer obtained using an organic alkali metal compound as a polymerization catalyst. Hydrogenation may also be performed after an organic alkali metal compound is reacted with a block copolymer (metalation reaction) and a modifier is reacted with the result. It is also possible to perform a metalation reaction after hydrogenation of a copolymer and to then react a modifier with the result.

The hydroxyl group, amino group or the like is sometimes converted into the corresponding organic metal salt after having reacted with modifier, depending on the kind of the modifier. In such a case, they can be back to a hydroxyl group, an amino group, or the like by treatment with water or a compound having active hydrogen such as alcohol.

The secondary modified hydrogenated block copolymer may be prepared by reacting the modified hydrogenated block copolymer with a secondary modifier. There is no particular limitation on the process and a known process can be employed.

As the secondary modifier, carboxylic acids having two or more carboxyl groups or acid anhydrides thereof, and modifiers having two or more groups selected from an acid anhydride group, an isocyanate group, an epoxy group, a silanol group, and an alkoxysilane group are usable. Examples include maleic anhydride, pyromellitic anhydride, 1,2,4,5-benzenetetracarboxylic dianhydride, tolylenediisocyanate, tetraglycidyl-1,3-bisaminomethylcyclohexane, and bis-(3-triethoxysilylpropyl)-tetrasulfane.

The secondary modified hydrogenated copolymer can also be obtained by graft modification of the hydrogenated block copolymer with an $\alpha,\beta$-unsaturated carboxylic acid or a derivative thereof, for example, an anhydride, an esterified derivative, an amidated derivative or an imidized derivative. Specific examples of such an $\alpha,\beta$-unsaturated carboxylic acid or derivative thereof include maleic anhydride, maleic anhydride imide, acrylic acid or an ester thereof, methacrylic acid or an ester thereof, and endo-cis-bicyclo[2,2,1]-5-heptene-2,3-dicarboxylic acid or an anhydride thereof. The $\alpha,\beta$-unsaturated carboxylic acid or derivative thereof is added in an amount of preferably 0.01 part by weight or greater and not greater than 20 parts by weight, more preferably 0.1 part by weight or greater and not greater than 10 parts by weight, each based on 100 parts by weight of the hydrogenated polymer.

The reaction temperature of graft modification is preferably from 100 to 300°C, more preferably from 120 to 280°C. For details of the graft modification method, it is possible to refer to, for example, Japanese Patent Laid-open No. Sho 62-79211.

There is no particular limitation on a hydrogenation catalyst to be used for obtaining the hydrogenated block copolymer of the present invention and conventionally known ones such as:

> (1) a support type heterogeneous hydrogenation catalyst in which a metal such as Ni, Pt, Pd or Ru is supported on carbon, silica, alumina, diatomaceous earth, or the like;
> (2) a so-called Ziegler type hydrogenation catalyst using a transition metal salt such as an organic acid salt or acetylacetone salt of Ni, Co, Fe, Cr or the like, and a reducing agent such as an organoaluminum; and
> (3) a homogeneous hydrogenation catalyst such as a so-called oraganometallic complex such as an organometallic compound of Ti, Ru, Rh, Zr or the like. Specific examples of the hydrogenation catalyst include those described in Japanese Patent Publication No. Sho 42-8704, Japanese Patent Publication No. Sho 43-6636, Japanese Patent Publication No. Sho 63-4841, Japanese Patent Publication No. Hei 1-37970, Japanese Patent Publication No. Hei 1-53851, and Japanese Patent Publication No. Hei 2-9041.

Preferred examples of the hydrogenation catalyst include mixtures of a titanocene compound and/or a reductive organometallic compound.

As the titanocene compound, compounds described in Japanese Patent Laid-open No. Hei 8-109219 are usable. Specific examples include compounds having at least one ligand having a (substituted) cyclopentadienyl skeleton, an indenyl skeleton, or a fluorenyl skeleton such as biscyclopentadienyltitanium dichloride and monopentamethylcyclopentadienyltitanium trichloride.

Examples of the reductive organometallic compound include organic alkali metal compounds such as organolithium, organomagnesium compounds, organoaluminum compounds, organoboron compounds, and organozinc compounds.

In the present invention, the hydrogenation reaction is carried out at a temperature of preferably 0 or greater and not greater than 200°C, more preferably 30 or greater and not greater than 150°C. The pressure of hydrogen used in the hydrogenation reaction is preferably 0.1 or greater and not greater than 15 MPa, more preferably 0.2 or greater and not greater than 10 MPa, more preferably 0.3 or greater and not greater than 5 MPa. The hydrogenation reaction time is preferably 3 minutes or greater and not greater than 10 hours, more preferably 10 minutes or greater and not greater than 5 hours. For the hydrogenation reaction, any of a batch process and a continuous process, and a combination thereof may be employed.

The hydrogenated block copolymer can be separated from the solvent by removing a catalyst residue as required from a solution obtained by the hydrogenation reaction. Examples of the separation method include a method of adding a polar solvent such as acetone or an alcohol, which serves as a poor solvent for the hydrogenated block copolymer, to the solution obtained by the hydrogenation reaction, and thereby precipitating and recovering the hydrogenated block polymer, a method of putting the solution obtained by hydrogenation reaction into hot water and removing the solvent and recovering the hydrogenated block copolymer by steam stripping, and a method of directly heating the solution obtained by the hydrogenation reaction and distilling off the solvent. To the hydrogenated block copolymer of the present invention, a stabilizer such as a phenol type stabilizer, a phosphorus type stabilizer, a sulfur type stabilizer, or an amine type stabilizer can be added.

In the present invention, a known process is usable without particular limitation for the preparation process of the resin composition comprising the hydrogenated block copolymer. Examples include a melt kneading method using an ordinary mixer such as a roll mixer, a Banbury mixer, a single-screw extruder, a twin-screw extruder, a co-kneader or a multi-screw extruder and a method comprising mixing necessary components by dissolving or dispersing followed by removing the solvent by heating the resultant mixture. In the present invention, the melt kneading method using an extruder is preferred from the viewpoint of productivity and kneading ability.

The preparation process of the crosslinked product is not particularly limited and known processes such as ultraviolet crosslinking, electron beam crosslinking, and thermocrosslinking can be employed. From an economical viewpoint, it is preferred to carry out crosslinking by adding a crosslinking agent to the above-described hydrogenated block copolymer or the resin composition comprising the hydrogenated block copolymer and heating the resulting mixture in a similar apparatus employed in the preparation process of the resin composition comprising the hydrogenated block copolymer.

The temperature for crosslinking is preferably 80 or greater and not greater than 200°C, more preferably 100 or greater and not greater than 180°C.

Examples of the crosslinking agent include radical generators such as organic peroxides and azo compounds, oxime compounds, nitroso compounds, polyamine compounds, sulfur, and sulfur-containing compounds. The sulfur-containing compounds include sulfur monochloride, sulfur dichloride, disulfide compounds, and high molecular polysulfide compounds.

The crosslinking agent is used in an amount of preferably 0.01 part by weight or greater and not greater than 20 parts by weight, more preferably 0.1 part by weight or greater and not greater than 15 parts by weight, based on 100 parts by weight, in total, of the hydrogenated block copolymer and the thermoplastic resin other than the hydrogenated block copolymer.

Specific examples of the organic peroxide include dicumyl peroxide, di-tert-butylperoxide, 2,5-dimethyl-2,5-di-(tert-butylperoxy)hexane, 2,5-dimethyl-2,5-di(tert-butylperoxy)hexine-3,1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butylperoxybenzoate, tert-butylperoxybenzoate, tert-butylperoxyisopropyl carbonate, diacetyl peroxide, lauroyl peroxide, and tert-butylcumyl peroxide.

Of these, in consideration of odor emission and scorching stability, preferred are dicumyl peroxide, di-tert-butylperoxide, 2,5-dimethyl-2,5-di(tert-butylperoxy)hexane, 2,5-dimethyl-2,5-di(tert-butylperoxy)hexine-3,1,3-bis(tert-butylperoxyisopropyl)benzene, 1,1-bis(tert-butylperoxy)-3,3,5-trimethylcyclohexane, and n-butyl-4,4-bis(tert-butylperoxy)valerate.

In carrying out crosslinking by using the above described organic peroxide, crosslinking assistants can be used in combination. Examples include sulfur, peroxy crosslinking assistants such as p-quinonedioxime, p,p'-dibenzoylquinonedioxime, N-methyl-N,4-dinitrosoaniline, nitrosobenzene, diphenylguanidine and trimethylolpropane-N,N'-m-phenylenedimaleimide; divinylbenzene, triallyl isocyanurate, and triallyl cyanurate; polyfunctional methacrylate monomers such as ethylene glycol dimethacrylate, diethylene glycol dimethacrylate, polyethylene glycol dimethacrylate, trimethylolpropane trimethacrylate and allyl methacrylate; and polyfunctional vinyl monomers such as vinyl butyrate and vinyl stearate. Such a crosslinking assistant is used in an amount of preferably 0.01 part by weight or greater and not greater than 20 parts by weight, more preferably 0.1 part by weight or greater and not greater than 15 parts by weight, each based on 100 parts by weight of total amount of the hydrogenated block copolymer and the thermoplastic resin other than the hydrogenated block copolymer.

When crosslinking is performed using sulfur or a sulfur-containing compound (sulfur vulcanization), a sulfenamide type, a guanidine type, a thiuram type, an aldehyde-amine type, an aldehyde-ammonia type, a thiazole type, a thiourea type, or a dithiocarbamate type vulcanization accelerator can be added in a desired amount as the crosslinking assistant (vulcanization accelerator). Further, zinc flower (zinc oxide) or stearic acid may be added as the crosslinking assistant (vulcanization accelerator) in a desired amount.

In the present invention, a hydrogenated copolymer composition may be crosslinked by metal ion crosslinking, silane crosslinking, resin crosslinking or the like method, or by crosslinking or water crosslinking using an electron beam or radiation after molding by extrusion or injection molding.

In the present invention, there in no particular limitation on a process for obtaining the crosslinked foamed product and known processes are usable. Extrusion foaming, press foaming and injection foaming are generally employed. More specifically, a process carrying out foaming and crosslinking by kneading the resin composition comprising the hydrogenated block copolymer, the crosslinking agent, and a foaming agent under a temperature conditions where the resin composition comprising the hydrogenated copolymer is in a molten state and the crosslinking agent can react is proposed.

Examples of foaming process include chemical process,physical process, or the like. Air bubbles can be distributed inside a material by adding a chemical foaming agent such as an inorganic foaming agent or an organic foaming agent, or a physical foaming agent. The crosslinked foamed product has a reduced weight and can display flexibility, excellent tear resistance, compression set resistance, low impact resilience and abrasion resistance. It is especially suited for a shoe sole material.

Examples of the inorganic foaming agent include sodium bicarbonate, ammonium carbonate, ammonium bicarbonate, ammonium nitrite, azide compounds, sodium borohydride, and metal powders.

Examples of the organic foaming agent include azodicarbonamide, azobisformamide, azobisisobutyronitrile, barium azodicarboxylate, N,N'-dinitrosopentamethylenetetramine, N,N'-dinitroso-N,N'-dimethylterephthalamide, benzenesulfonyl hydrazide, p-toluenesulfonyl hydrazide, p,p'-oxybisbenzenesulfonyl hydrazide, and p-toluenesulfonyl semicarbazide.

Examples of the physical foaming agent include hydrocarbons such as pentane, butane, and hexane, halogenated hydrocarbons such as methyl chloride and methylene chloride, fluorinated hydrocarbons such as trichlorofluoromethane, dichlorodifluoromethane, trichlorotrifluoroethane, chlorodifluoroethane, and hydrofluorocarbon, and gases such as nitrogen and air. These foaming agents may be used in combination. The foaming agent is added generally in an amount of preferably 0.1 part by weight or greater and not greater than 8 parts by weight, more preferably 0.3 part by weight or greater and not greater than 6 parts by weight, still more preferably 0.5 part by weight or greater and not greater than 5 parts by weight, each based on 100 parts by weight of total amount of the hydrogenated block copolymer and the thermoplastic resin other than the hydrogenated block copolymer.

The hydrogenated copolymer of the present invention can also be used for a thermoplastic elastomer composition obtained by dynamic crosslinking the hydrogenated block copolymer of the present invention and a resin with a low radical crosslinkability in the presence of a radical initiator while melting and kneading them in an extruder. A crosslinked product (hereinafter referred as "thermoplastic vulcanizate") obtained by the above-described method shows further improved tear strength, low impact resilience and abrasion resistance.

[Examples]

The present invention will hereinafter be described in further detail by Examples and Comparative Examples. The present invention is however not limited by these Examples.

[Measuring method of properties of polymer]

Properties or physical properties of a polymer were measured in the following manner.

1) Styrene content, vinyl bond content of conjugated diene, and hydrogenation ratio of double bonds derived from conjugated diene

An amount of a styrene unit, a 1,4-bond unit and a 1,2-bond unit of butadiene, an ethylene unit, and a butylene unit in a polymer were measured under the following conditions by nuclear magnetic resonance spectrum analysis (NMR).

Measuring apparatus: "JNM-LA400 (product of JEOL)
Solvent: deuterated chloroform
Sample to be measured: polymers sampled before and after hydrogenation
Sample concentration: 50 mg/ml
Frequency observed: 400 MHz
Chemical shift standard: TMS (tetramethylsilane)
Pulse delay: 2.904 seconds
Scanning times: 64 times
Pulse width: 45°
Measuring temperature: 26°C

2) Styrene block content

A styrene block content was measured by the osmium tetroxide method described in I. M. Kolthoff, et al., J. Polym. Sci. 1, 429 (1946).

Sample to be measured: polymer sampled before hydrogenation
Polymer decomposing solution: a solution obtained by dissolving 0.1 g of osmic acid in 125 ml of tertiary butanol.

3) Weight average molecular weight and molecular weight distribution

The weight average molecular weight and the molecular weight distribution of the copolymer were measured under the following conditions by gel permeation chromatography (GPC).
Measuring apparatus: "LC-10" (product of Shimadzu)
Column: "TSKgelGMHXL" (4.6 mm ID $\times$ 30 cm), two columns
Solvent: tetrahydrofuran
Sample for calibration curve: commercially available (product of TOSOH Co., Ltd.) standard polystyrene, 10-point measurement
The molecular weight distribution was determined from a ratio of the resulting weight average molecular weight and number average molecular weight.

4) Coupling ratio

A coupling ratio was determined using a peak area of sample before coupling and a peak area of sample after coupling based on the molecular weight distribution determined by GPC measurement.

5) Melt flow rate

The melt flow rate was determined in accordance with JIS K-7210 by comparing the flow amount of the resin for 10 minutes.
Measuring temperature: 190°C
Load weight: 2.16 Kg

[Preparation of hydrogenated block copolymer, thermoplastic resin comprising the hydrogenated block copolymer, crosslinked product thereof, and crosslinked foamed product thereof]

(I) Hydrogenated block copolymer

(1) Preparation of hydrogenation catalyst

The hydrogenation catalyst used for a hydrogenation reaction was prepared in the following manner.
    (a) Hydrogenation catalyst I

        (i) Charge a nitrogen-purged reaction vessel with 1 liter of dried and purified cyclohexane.
        (ii) Add 100 mmol of bis($\eta^5$-cyclopentadienyl)titanium dichloride.
        (iii) Add an n-hexane solution containing 200 mmol of trimethylammonium while stirring sufficiently.
        (iv) React the resulting mixture for about 3 days at room temperature.

    (b) Hydrogenation catalyst II

        (i) Charge a nitrogen-purged reaction vessel with 2 liters of dried and purified cyclohexane.
        (ii) Dissolve 40 mmol of bis($\eta^5$-cyclopentadienyl)titanium di-(p-tolyl) and 150 g of 1,2-polybutadiene (1,2-vinyl bond content: about 85%) having a molecular weight of about 1000.
        (iii) Add a cyclohexane solution containing 60 mmol of n-butyllithium and react the resulting mixture for 5 minutes at room temperature.
        (iv) Add 40 mmol of n-butanol immediately and stir the mixture.

Store the reaction mixture at room temperature.

(c) Hydrogenation catalyst III
Catalyst described in Japanese Patent No. 3273635

(2) Preparation of hydrogenated block copolymer

Raw materials employed for the preparation and their composition are shown in Table 1. Abbreviations and remarks in Table 1 are shown below. Cyclohexane: used as a solvent for initial charge.
n-BuLi: normal butyllithium
TMEDA: N,N,N',N'-tetramethylethylenediamine. TMEDA was used after dilution with cyclohexane.
St: styrene
Bd: butadiene
Ip: isoprene
The above-described three monomers were added as a 24% monomer solution after dilution with cyclohexane in both cases they were used singly or as a monomer mixture.
Et benzoate: ethyl benzoate. It was used as a bifunctional coupling agent. It was used after dilution with cyclohexane.
Methanol: used for terminating the polymerization
Octadecyl-3-(3,5-di-t-butyl-4-hydroxyphenyl)propionate: used as a stabilizer.

<Polymer 1>

Reactor: tank reactor equipped with a stirrer and a jacket (internal volume: 10 liters)

(First stage) After cyclohexane was charged in the reactor and the temperature was adjusted to 70°C, n-butyllithium was added from the bottom portion of the reactor. Next, N,N,N',N'-tetramethylethylenediamine was added. Styrene was then supplied over about 10 minutes. After the supply was stopped, the reaction was performed for 15 minutes while keeping the temperature in the reactor at 70°C.
(Second stage) Butadiene and styrene were supplied to the reactor continuously at a fixed rate over 60 minutes and the temperature in the reactor during the supply was adjusted to fall within a range of from 70 to 80°C. After the supply was stopped, the reaction was performed for 10 minutes while controlling the temperature in the reactor to 70°C.
(Coupling reaction) Ethyl benzoate was added and the reaction was performed for 10 minutes while keeping the temperature in the reactor to 70°C. Methanol was then added.
(Hydrogenation reaction) The hydrogenation catalyst I was added and a hydrogenation reaction was performed for one hour under a hydrogen pressure of 0.7 MPa and at a temperature of 65°C. After completion of the reaction, octadecyl-3-(3,5-di-t-butyl-4-hydroxyphenyl)propionate was added to yield a hydrogenated copolymer (Polymer 1).
Physical properties, composition, block content and each bond content of the polymer were determined using a sample obtained at the time of completion of the second stage reaction. The results are shown in Table 1. A coupling ratio calculated using samples obtained respectively at the time of completion of the second stage reaction and at the time of completion of the coupling reaction was 50%.
The hydrogenation ratio and melt flow rate of the polymer are also shown in Table 1.

<Polymers 2, 3, 4, and 5>

Except for the amount of N,N,N',N'-tetramethylethylenediamine, the amount of the monomer, or the kind of a hydrogenation catalyst was changed as shown in Table 1, polymerization was performed in the same way as employed for Polymer 1.

<Polymer 6>

Reactor: the same reactor as employed in the preparation of Polymer 1

(First stage) After cyclohexane was charged in the reactor and the temperature was adjusted to 60°C, n-butyllithium was added from the bottom portion of the reactor. Next, N,N,N',N'-tetramethylethylenediamine was added. Styrene was then supplied over about 15 minutes. After the supply was terminated, the reaction was performed for 20 minutes while keeping the temperature in the reactor at 60°C.
(Second stage) Isoprene was supplied to the reactor continuously at a fixed rate over 90 minutes and the

14

reaction was then performed for 10 minutes.

The temperature in the reactor was adjusted to 60°C.

(Third stage) Styrene was supplied over 15 minutes.

(Hydrogenation reaction) The hydrogenation catalyst III was added to the solution after the completion of the polymerization reaction and a hydrogenation reaction was performed under the conditions described in Japanese Patent No. 3273635. After completion of the reaction, methanol and octadecyl-3-(3,5-di-t-butyl-4-hydroxyphenyl)propionate were added successively to yield a hydrogenated copolymer (Polymer 6).

Physical properties, composition, block content and bond content of the polymer were determined using a sample obtained at the time of completion of the third stage reaction. The results are shown in Table 1.

The hydrogenation ratio and melt flow rate of Polymer 6 are also shown in Table 1.

<Polymer 7>

Reactor: the same reactor as employed in the preparation of Polymer 1

(First stage) After cyclohexane was charged in the reactor and the temperature was adjusted to 60°C, n-butyllithium was added from the bottom portion of the reactor. Next, N,N,N',N'-tetramethylethylenediamine was added. Styrene was then supplied over about 10 minutes. After the supply was terminated, the reaction was performed for 15 minutes while keeping the temperature in the reactor at 60°C.

(Second stage) Butadiene was supplied to the reactor continuously at a fixed rate over 60 minutes and the reaction was then performed for 10 minutes.

The temperature in the reactor was adjusted to from 60 to 70°C.

(Third stage) Styrene was supplied over about 10 minutes.

(Hydrogenation reaction) A hydrogenation catalyst was added and a hydrogenation reaction was performed under a hydrogen pressure of 0.7 MPa and at a temperature of 65°C. After completion of the reaction, methanol and octadecyl-3-(3,5-di-t-butyl-4-hydroxyphenyl)propionate were added successively to yield a hydrogenated copolymer (Polymer 7).

Physical properties, composition, block content and bond content of the polymer were determined using a sample obtained at the time of completion of the third stage reaction. The results are shown in Table 1.

The hydrogenation ratio and melt flow rate of Polymer 7 are also shown in Table 1

[Table 1]

| | | Polymer | | | | | | |
|---|---|---|---|---|---|---|---|---|
| | | 1 | 2 | 3 | 4 | 5 | 6 | 7 |
| | Polymerization temperature | 70 | 70 | 70 | 70 | 70 | 60 | 60 |
| | Hydrogenation temperature | 65 | 65 | 65 | 65 | 65 | 60 | 65 |
| First stage | Cylohexane | 200 | 200 | 200 | 200 | 200 | 200 | 200 |
| | n-BuLi | 0.09 | 0.09 | 0.09 | 0.09 | 0.09 | 0.1 | 0.07 |
| | TMEDA | 0.11 | 0.11 | 0.05 | 0.14 | 0.11 | 0.13 | 0.19 |
| | St | 20 | 20 | 20 | 20 | 20 | 5 | 7 |
| Second stage | St | 33 | 33 | 31 | 33 | 33 | 0 | 0 |
| | Bd | 47 | 47 | 49 | 47 | 47 | 0 | 86 |
| | Ip | 0 | 0 | 0 | 0 | 0 | 90 | 0 |
| Coupling | Et benzoatel/$10^{-4}$ parts by weight | 3.5 | 3.5 | 3.5 | 3.5 | 3.5 | - | - |
| Third stage | St | - | - | - | - | - | 5 | 7 |
| Additive | Methanol/$10^{-3}$ parts by weight | 23 | 23 | 23 | 23 | 23 | 50 | 35 |
| Hydrogenation reaction | Hydrogenation catalyst | I | I | I | II | I | III | I |
| | Amount of catalyst (in Ti amount) /ppm | 100 | 100 | 100 | 100 | 100 | 100 | 100 |

(continued)

| | | Polymer | | | | | | |
|---|---|---|---|---|---|---|---|---|
| | | 1 | 2 | 3 | 4 | 5 | 6 | 7 |
| Additive | Octadecyl-3-(3,5-di-t-butyl-4-hydroxyphenyl)propionate | 0.25 | 0.25 | 0.25 | 0.25 | 0.25 | 0.25 | 0.25 |

The unit of these values is a part by weight unless otherwise particularly specified.

[Table 2]

| Composition, structure and molecular weight of polymer | Polymer | | | | | | |
|---|---|---|---|---|---|---|---|
| | 1 | 2 | 3 | 4 | 5 | 6 | 7 |
| Styrene content in polymer (wt.%) | 67 | 67 | 66 | 67 | 67 | 10 | 14 |
| Styrene block content in polymer (wt.%) | 20 | 20 | 20 | 20 | 20 | 10 | 14 |
| Kind of conjugate diene (butadiene: Bd, isoprene: Ip) | Bd | Bd | Bd | Bd | Bd | Ip | Bd |
| Vinyl content in conjugate diene (%) | 25 | 25 | 15 | 35 | 25 | 53 | 75 |
| Weight average molecular weight (unit: 10000) | 19 | 19 | 18 | 19 | 19 | 10 | 15 |
| Molecular weight distribution (weight average molecular weight/ number average molecular weight) | 1.7 | 1.7 | 1.7 | 1.7 | 1.7 | 1.1 | 1.1 |
| Coupling ratio | 50 | 50 | 50 | 50 | 50 | - | - |
| Hydrogenation ratio of double bonds in conjugated diene (%) | 30 | 55 | 99 | 20 | 75 | 75 | 98 |
| Melt flow rate (g/10 minutes) | 5.4 | 2.4 | 0.6 | 5.6 | 1.3 | 1.4 | 0.9 |

(II) Molding or forming of crosslinked product and crosslinked foamed product of hydrogenated block copolymer and resin composition comprising the hydrogenated block copolymer

(First step)
Components shown in Table 3 or Table 4 were kneaded under the following conditions.
Melting kneader: kneader
Kneading temperature: from 110 to 120°C
Kneading time: 15 minutes
(Second step)
The kneaded mass obtained in the first step and an additive shown in Table 3 or 4 were kneaded.
Melting kneader: two-roll open mill
Kneading temperature: from 90 to 100°C
Kneading time: 10 minutes
(Third step)
The kneaded mass obtained in the second step was molded under the following conditions.
Molding machine: compression molding machine
Molding temperature: 160°C
Molding pressure: 14.7 MPa
Retention time: 20 minutes
After completion of the retention time, the pressure was released to obtain a molding of the crosslinked product or a molding of the crosslinked foamed product of the polymer composition.

[Measurement of properties of the molding of the crosslinked product and the molding of the crosslinked foamed product]

1) Hardness

Hardness of the crosslinked foamed product was measured in accordance with ASTM-D2240.
Measuring apparatus: Asker C type Durometer Hardness Tester

Measuring temperature: 22°C

2) Tensile strength and tear strength

They were measured in accordance with ASTM-D412.

Sample: A sample was obtained by cutting, with a dumbbell cutter, the molding of the crosslinked product into a piece of 2 mm thick or the molding of the crosslinked foamed product into a piece of 3 mm thick.

3) Compression set resistance

Compression set resistance was measured in accordance with ASTM-D3754.

Sample: disk having a thickness of 10 mm and a diameter of 30 mm

Compressive strain condition: 50% (a space bar having a thickness of half the thickness of a test piece was used)

Measuring temperature: 50°C

Compression time: 6 hours

After compression, the sample was taken out from the apparatus and was allowed to stand at room temperature for one hour. Then, the compression set was determined in accordance with the following equation. The sample having a smaller Cs value is superior in compression set resistance.

$$Cs\ (\%) = [(T0\text{-}TF)/(T0\text{-}TS)] \times 100$$

T0 = thickness of test piece before measurement

TF = thickness of test piece after it is allowed to stand at room temperature after measurement

TS = thickness of space bar

4) Impact resilience

Sample: sheet having a thickness of from 15 to 17 mm

Ball: made of steel, 16.3 g

Measuring temperature: 22°C

The ball was dropped onto the sample and the impact resilience of it was determined in accordance with the following equation. The sample showing lower impact resilience is superior in impact absorption.

$$\text{Impact resilience}\ (\%) = [HR/H0] \times 100$$

H0 = height of the ball when dropped

HR = height of the ball upon maximum rebounce

5) Williams abrasion

Sample: test piece made of a 20 $\times$ 20 mm square plate having a thickness of 10 mm and having a fixing lug attached onto the square surface of the plate.

Contact bonding force of the test piece to an abrasive plate: a load of 3.62 Kg

Measuring temperature: room temperature

Abrasion time: 3.0 hours for the crosslinked product and 1.0 hour for the crosslinked foamed product.

A volume loss caused by abrasion under the above-described conditions was measured and abrasion was evaluated in accordance with the following criteria:

A: the volume loss after one-hour abrasion is not greater than 0.03 ml

B: the volume loss exceeds 0.03 ml and not greater than 0.06 ml

C: the volume loss exceeds 0.06 ml and not greater than 0.09 ml

D: the volume loss exceeds 0.09 ml

[Examples and Comparative Examples]

[Examples 1 and 2, Comparative Examples 1 to 4]

Molding of a crosslinked product of the hydrogenated block copolymer was performed in accordance with the composition shown in Table 3.

Evaluation results of their physical properties required in practical use are also shown in Table 3.

The results have revealed that a molding having high tear strength and abrasion resistance can be obtained by using a hydrogenated block copolymer whose vinyl aromatic unit content is greater than 35 wt.% and not greater than 90 wt.%, vinyl aromatic polymer block content is not greater than 40 wt.%, and hydrogenation ratio of double bonds derived from a conjugated diene is less than 70%.

[Table 3]

| | | | | Examples | | Comparative Examples | | | |
|---|---|---|---|---|---|---|---|---|---|
| | | Components | | 1 | 2 | 1 | 2 | 3 | 4 |
| First step | Component (A) | Hydrogenated copolymer | Polymer 1 | 100 | | | | | |
| | | | Polymer 2 | | 100 | | | | |
| | | | Polymer 3 | | | 100 | | | |
| | | | Polymer 5 | | | | 100 | | |
| | | | Polymer 6 | | | | | 100 | |
| | | | Polymer 7 | | | | | | 100 |
| | Additive | Zinc oxide | | 5 | 5 | 5 | 5 | 5 | 5 |
| | | Stearic acid | | 1 | 1 | 1 | 1 | 1 | 1 |
| | | Titanium oxide | | 4 | 4 | 4 | 4 | 4 | 4 |
| | | Zinc stearate | | 1 | 1 | 1 | 1 | 1 | 1 |
| Second step | Additive | Dicumyl peroxide (crosslinking agent) | | 0.8 | 1.2 | 2.4 | 1.4 | 1.4 | 1.4 |
| | | Triallyl cyanurate (Crosslinking assistant) | | 0.4 | 0.4 | 0.4 | 0.4 | 0.4 | 0.4 |
| Physical properties | Tear strength (kN/m$^2$) | | | 1962 | 1766 | 1373 | 1472 | 1275 | 1177 |
| | Williams abrasion | | | A | A | C | C | C | C |

[Examples 3 to 10, Comparative Examples 5 to 8]

A molding of the crosslinked foamed product of the resin composition comprising the hydrogenated block copolymer was obtained in accordance with the composition shown in Table 4.

Evaluation results of their physical properties required in practical use are also shown in Table 4.

The moldings obtained in Examples 3 to 10 are particularly superior to those obtained in Comparative Examples 5 to 8 in abrasion resistance. It has been found that moldings satisfying all of high tear strength, high compression set resistance, low impact resilience (high impact absorption), and high abrasion resistance can be obtained by using a hydrogenated block copolymer whose vinyl aromatic unit content is greater than 35 wt.% and not greater than 90 wt.%, vinyl aromatic polymer block content is not greater than 40 wt.%, hydrogenation ratio of double bonds derived from a conjugated diene is less than 70%.

[Table 4]

| | Components | | | Examples | | | | | | | | Comparative Examples | | | |
|---|---|---|---|---|---|---|---|---|---|---|---|---|---|---|---|---|
| | | | | 3 | 4 | 5 | 6 | 7 | 8 | 9 | 10 | 5 | 6 | 7 | 8 |
| First step | Component (A) | Hydrogenated copolymer | Polymer 1 | 30 | 50 | | | | 40 | 40 | 40 | | | | |
| | | | Polymer 2 | | | 30 | 50 | | | | | | | | |
| | | | Polymer 3 | | | | | | | | | 30 | 50 | | |
| | | | Polymer 4 | | | | | 50 | | | | | | | |
| | | | Polymer 5 | | | | | | | | | | | 50 | |
| | | | Polymer 6 | | | | | | | | | | | | 50 |
| | | | Polymer 7 | | | | | | 20 | 10 | 10 | | | | |
| | Component (B) | Thermoplastic resin | EVA*1) | 70 | 50 | 70 | 50 | 50 | 40 | 30 | 20 | 70 | 50 | 50 | 50 |
| | | | TPO *2) | | | | | | | 20 | 15 | | | | |
| | | | BIIR*3) | | | | | | | | 15 | | | | |
| | Additive | | Zinc oxide | 5 | 5 | 5 | 5 | 5 | 5 | 5 | 5 | 5 | 5 | 5 | 5 |
| | | | Stearic acid | 1 | 1 | 1 | 1 | 1 | 1 | 1 | 1 | 1 | 1 | 1 | 1 |
| | | | Titanium oxide | 4 | 4 | 4 | 4 | 4 | 4 | 4 | 4 | 4 | 4 | 4 | 4 |
| | | | Zinc stearate | 1 | 1 | 1 | 1 | 1 | 1 | 1 | 1 | 1 | 1 | 1 | 1 |
| Second step | Additive | | Dicumyl peroxide (crosslinking agent) | 0.8 | 0.8 | 1.2 | 1.2 | 0.5 | 0.5 | 1.0 | 1.0 | 2.4 | 2.4 | 1.4 | 1.4 |
| | | | Triallyl cyanurate (crosslinking assistant) | 0.4 | 0.4 | 0.4 | 0.4 | 0.4 | 0.4 | 0.4 | 0.4 | 0.4 | 0.4 | 0.4 | 0.4 |
| | | | Azodicarboxylic acid amide (foaming agent) | 4.0 | 4.0 | 4.0 | 4.0 | 4.0 | 4.0 | 4.0 | 4.0 | 4.0 | 4.0 | 4.0 | 4.0 |

(continued)

| | Components | Examples | | | | | | | | Comparative Examples | | | |
|---|---|---|---|---|---|---|---|---|---|---|---|---|---|
| | | 3 | 4 | 5 | 6 | 7 | 8 | 9 | 10 | 5 | 6 | 7 | 8 |
| Physical properties | Hardness (Asker C) 22°C | 61 | 59 | 62 | 59 | 60 | 56 | 61 | 56 | 57 | 56 | 56 | 55 |
| | Tear strength (kN/m2) | 952 | 1069 | 932 | 952 | 1030 | 981 | 991 | 981 | 863 | 912 | 922 | 883 |
| | Compression set (%) | 47 | 45 | 45 | 45 | 45 | 44 | 45 | 45 | 51 | 46 | 46 | 48 |
| | Impact resilience (%) | 20 | 13 | 20 | 13 | 13 | 14 | 14 | 12 | 31 | 23 | 14 | 16 |
| | Williams abrasion | B | A | B | A | A | A | A | B | D | C | C | D |
| *1) Ethylene-vinyl acetate copolymer "EVA460"(trade name; product of Dupont) *2) "Ethylene $\alpha$-olefin copolymer 0201" (trade name; product of Exxon Mobil) *3) "Chlorinated butyl rubber 2244"(trade name; product of JSR Co., Ltd.) | | | | | | | | | | | | | |

[Industrial Applicability]

The hydrogenated block copolymer, the resin composition comprising the hydrogenated block copolymer, and the crosslinked product and the crosslinked foamed product thereof according to the present invention which are excellent in low impact resilience are suited particularly as a shoe sole material because they absorb impact. In addition, since they are excellent in various properties such as tear strength, compression set resistance, low impact resilience, and abrasion resistance, they are suited for use in a variety of applications as follows:

> damping materials: floor materials, wall materials, ceilings, window frames, shutters, doors, soundproof walls, roof materials, damping apparatuses, vibration isolating apparatuses, dampers, pipes for water supply or water discharge, damping films, and fall prevention sheets/mats/films such as damping films, vibration isolating sheets, and antivibration mats of condominiums or like buildings;
> sound absorbing materials or sound insulating materials: support turntables for records, CD players, microphone holders, cone edges of a speaker, and acoustic apparatuses such as radio-cassette recorders and mini discs;
> office automation equipment such as copiers, facsimiles, and printers;
> communication apparatuses such as mobile phones and mobile PCs;
> household electric appliances such as television sets, refrigerators, and air conditioners,
> automobiles, and the like.

When they are used for household electric appliances, they can reduce a noise or a resonance sound which occurs at the time of starting their motors and when they are used for automobiles, they can reduce a noise in an engine room or a noise inside the automobiles.

## Claims

1. A hydrogenated block copolymer comprising a vinyl aromatic compound and a conjugated diene, wherein:

   (a) the vinyl aromatic unit content is greater than 35 wt.% and not greater than 90 wt.%,
   (b) the vinyl aromatic polymer block content is not greater than 40 wt.%,
   (c) the hydrogenation ratio of double bonds derived from the conjugated diene is less than 70%, and
   (d) the weight average molecular weight is from $5 \times 10^4$ to $100 \times 10^4$.

2. The hydrogenated block copolymer according to Claim 1, which has at least one random copolymer block of the vinyl aromatic compound and the conjugated diene.

3. The hydrogenated block copolymer according to Claim 1 or 2, wherein the vinyl aromatic unit content is greater than 50 wt.% and not greater than 90 wt.%.

4. The hydrogenated block copolymer according to any one of Claims 1 to 3, wherein the hydrogenation ratio of double bonds derived from the conjugated diene is 5% or greater and not greater than 65%.

5. The hydrogenated block copolymer according to any one of Claims 1 to 4, wherein a melt flow rate (JIS K-7210: at 190°C and a load of 2.16 Kg) is 0.01 or greater and not greater than 60 (measurement unit: g/10 min).

6. The hydrogenated block copolymer according to Claim 5, wherein the melt flow rate (JIS K-7210: at 190°C and a load of 2.16 Kg) is 0.1 or greater and not greater than 40 (measurement unit: g/10 min).

7. A resin composition comprising the hydrogenated block copolymer according to any one of Claims 1 to 6 and a thermoplastic resin other than the hydrogenated block copolymer.

8. The resin composition according to Claim 7, wherein a weight ratio of the hydrogenated block copolymer and the thermoplastic resin other than the hydrogenated block copolymer (the hydrogenated block copolymer/the thermoplastic resin other than the hydrogenated block copolymer weight ratio) is from 5/95 to 95/5.

9. The resin composition according to Claim 7 or 8, wherein the thermoplastic resin is an olefin thermoplastic resin.

10. The resin composition according to Claim 9, wherein the thermoplastic resin is at least one ethylene polymer selected from the group consisting of polyethylene, an ethylene-propylene copolymer, an ethylene-propylene-butylene copolymer, an ethylene-butylene copolymer, an ethylene-hexene copolymer, an ethylene-octene copolymer, an ethylene-vinyl acetate copolymer, an ethylene-acrylic ester copolymer, and an ethylene-methacrylic ester copolymer.

**11.** The composition comprising the hydrogenated block copolymer or the resin composition according to any one of Claims 1 to 10 and a crosslinking agent.

**12.** The composition according to Claim 11, further comprising a crosslinking assistant.

**13.** The composition according to Claim 11 or 12, wherein a used amount of the crosslinking agent or the crosslinking assistant is 0.01 part by weight or greater and not greater than 20 parts by weight based on 100 parts by weight of the hydrogenated block copolymer or total amount of the hydrogenated block copolymer and the thermoplastic resin other than the hydrogenated block copolymer.

**14.** A crosslinked product comprising the hydrogenated block copolymer, the resin composition, or the composition as claimed in any one of Claims 1 to 12.

**15.** A crosslinked foamed product comprising the hydrogenated block copolymer, the resin composition, or the composition according to any one of Claims 1 to 12.

**16.** A thermoplastic vulcanizate comprising the hydrogenated block copolymer, the resin composition, or the composition according to any one of Claims 1 to 12.

**17.** Footwear obtained using the crosslinked foamed product as claimed in Claim 15.

## INTERNATIONAL SEARCH REPORT

| International application No. |
|---|
| PCT/JP2007/052118 |

A. CLASSIFICATION OF SUBJECT MATTER
*C08F297/02*(2006.01)i, *A43B13/04*(2006.01)i, *C08F8/04*(2006.01)i, *C08J9/04*
(2006.01)i, *C08L23/04*(2006.01)i, *C08L53/00*(2006.01)i

According to International Patent Classification (IPC) or to both national classification and IPC

B. FIELDS SEARCHED

Minimum documentation searched (classification system followed by classification symbols)
C08F297/02, A43B13/04, C08F8/04, C08J9/04, C08L23/04, C08L53/00

Documentation searched other than minimum documentation to the extent that such documents are included in the fields searched
Jitsuyo Shinan Koho        1922-1996   Jitsuyo Shinan Toroku Koho    1996-2007
Kokai Jitsuyo Shinan Koho  1971-2007   Toroku Jitsuyo Shinan Koho    1994-2007

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-149553 A (Kuraray Co., Ltd.), 27 May, 2004 (27.05.04), Claims; Par. Nos. [0028], [0045] to [0059], [0065] (Family: none) | 1-17 |
| X | JP 2004-91530 A (Kuraray Co., Ltd.), 25 March, 2004 (25.03.04), Claims; Par. Nos. [0015], [0041], [0046], [0049] (Family: none) | 1-17 |
| X | JP 2004-91529 A (Kuraray Co., Ltd.), 25 March, 2004 (25.03.04), Claims; Par. Nos. [0016], [0047], [0051] (Family: none) | 1-17 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 May, 2007 (01.05.07) | 15 May, 2007 (15.05.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2007/052118 |

C (Continuation).    DOCUMENTS CONSIDERED TO BE RELEVANT

| Category* | Citation of document, with indication, where appropriate, of the relevant passages | Relevant to claim No. |
| --- | --- | --- |
| X | JP 2003-286384 A  (Riken Technos Kabushiki Kaisha), 10 October, 2003 (10.10.03), Claims; Par. Nos. [0036] to [0044], [0143] (Family: none) | 1-17 |
| X | JP 2003-201312 A  (Asahi Kasei Corp.), 18 July, 2003 (18.07.03), Claims; Par. Nos. [0067], [0112] & WO 2003/008466 A1      & EP 1411066 A1 & US 2004/014592 A1     & US 2006/128891 A1 | 1-17 |
| X | JP 10-60220 A  (Kuraray Co., Ltd.), 03 March, 1998 (03.03.98), Claims; Par. Nos. [0009] to [0010], [0023], [0026] (Family: none) | 1-17 |
| X | JP 2-103253 A  (Asahi Chemical Industry Co., Ltd.), 16 April, 1990 (16.04.90), Claims; page 4, lower right column to page 5, upper left column; page 9, upper right column to lower left column (Family: none) | 1-17 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO5630401 B
- JP SHO5630447 B
- JP HEI236244 B
- JP HEI2158643 B
- JP HEI6287365 B
- JP 2001197902 A
- WO 2004090028 A
- JP HEI05345833 B
- JP 2003277539 A
- US 5708092 A
- GB 2241239 A
- US 5527753 A
- JP HEI439495 B
- US 5115035 A
- JP SHO6279211 B
- JP SHO428704 B
- JP SHO436636 B
- JP SHO634841 B
- JP HEI137970 B
- JP HEI153851 B
- JP HEI29041 B
- JP HEI8109219 B
- JP 3273635 B

**Non-patent literature cited in the description**

- **I.M. KOLTHOFF et al.** *J. Polym. Sci.,* 1946, vol. 1, 429
- **I. M. KOLTHOFF et al.** *J. Polym. Sci.,* 1946, vol. 1, 429